# EUROPÄISCHE PATENTSCHRIFT

(11) **EP 2 433 869 B1**
(45) Veröffentlichungstag und Bekanntmachung des Hinweises auf die Patenterteilung: **30.10.2013**
(21) Anmeldenummer: 10178284.5
(22) Anmeldetag: 22.09.2010
(51) Int. Cl.: B64D 47/04

(54) **LED-Landelichtanordnung für ein Flugzeug**
LED landing light assembly for an airplane
Agencement de lumière d'atterrissage à DEL pour un avion

(43) Veröffentlichungstag der Anmeldung: 28.03.2012
(73) Patentinhaber: Goodrich Lighting Systems GmbH, 59557 Lippstadt (DE)
(72) Erfinder: Willeke, Benjamin, 33154 Salzkotten (DE); Beier, Enrico, 59557 Lippstadt (DE); Wernicke, Alexander, 59555 Lippstadt (DE); Hessling, Andre, 56179 Vallendar (DE)
(74) Vertreter: Klunker . Schmitt-Nilson . Hirsch

(56) Entgegenhaltungen:
- GB-A- 601 079
- US-A1- 2005 093 718
- US-A1- 2008 137 353

## Beschreibung

Die Erfindung betrifft eine LED-Landelichtanordnung zur Verwendung bei einem Flugzeug mit verbesserter Beleuchtung der Bereiche seitlich des Cockpits und vor dem Cockpit während des Flugzeug-Anfluges, des Aufsetzens und des Rollens auf der Landebahn, dem Rollfeld und dem Feld vor dem Terminal. Die erfindungsgemäße LED-Landelichtanordnung erhöht die Sicherheit und den Komfort für die Flugzeugpiloten sowie die Sichtbarkeit des Flugzeuges durch Dritte. Ferner betrifft die Erfindung ein Flugzeug mit einer LED-Landelichtanordnung.

Aktuell im Einsatz befindliche Flugzeuge weisen Landescheinwerfer auf, die im Flugzeug-Anflug genutzt werden und in den Flügelwurzeln sowie an dem vorderen Landefahrwerk angeordnet sind (siehe z.B. US-A-2008/0137353 und GB-A-601079). Nach dem Aufsetzen des Flugzeuges und beim Rollen des Flugzeuges am Boden werden die Landescheinwerfer durch Abbiege- und Rollscheinwerfer unterstützt, die eine breite Lichtverteilung nach vorne und zur Seite aufweisen. Aufgrund ihrer Ausrichtung und Leistungsfähigkeit ermöglichen die Abbiege- und Rollscheinwerfer lediglich beim Rollen des Flugzeuges am Boden eine Sicht zur Seite. Diese Scheinwerfer eignen sich also nicht dazu, das beleuchtete Sichtfeld der Piloten beim Landeanflug zu vergrößern bzw. zu verbessern.

Gegenwärtig existieren im Wesentlichen zwei Haupttypen von Landescheinwerfern, nämlich sogenannte HID- und "Sealed Beam" Scheinwerfer. Beide Landescheinwerfertypen weisen eine relativ enge rotationssymmetrische Lichtverteilung auf, die sinnvoller Weise in Richtung des Aufsetzpunktes des Flugzeuges auf die Landebahn ausgerichtet sind. Mittlerweile sind aber auch erste Typen von LED-Landescheinwerfer bekannt, die die gleichen Lichtmuster aufweisen, wie die beiden zuvor genannten Landescheinwerfertypen. Bei den bisherigen Landescheinwerfern geht allerdings aufgrund von Abschattungen und nicht ausreichender Intensität relativ viel Streulicht verloren. Ferner können die HID-Landescheinwerfer nicht für eine schräg nach unten gerichtete Bodensicht der Piloten genutzt werden. Die schmalen Lichtstrahlen erzeugen einen "Finger"-Effekt mit hohen Leuchtlichtunterschieden, was durch die Seiten- und Höhenwinkeländerungen des Flugzeuges beim Landeanflug dazu führt, dass die ausgeleuchteten Bereiche auf dem Boden "tanzen" und keine ganzheitliche Ausleuchtung des Landeplatzes möglich ist.

Von Landelichtanordnungen, deren Licht im Landeanflug des Flugzeuges in Richtung auf die Landebahn gerichtet ist, zu unterscheiden sind Navigations- bzw. Positionsleuchten, wie sie z.B. in US-A-2005/0093718 beschrieben sind.

Aufgabe der Erfindung ist es, mit einfachen Mitteln den für die Piloten beim Landeanflug relevanten Bereich vor dem Cockpit und beidseitig zu dieser zuverlässig auszuleuchten.

Zur Lösung dieser Aufgabe wird mit der Erfindung ein Flugzeug mit einer LED-Landelichtanordnung vorgeschlagen, die versehen ist mit den Merkmalen des Anspruchs 1. Ferner wird mit der Erfindung die Verwendung einer LED-Landelichtanordnung gemäß Anspruch 4 vorgeschlagen.

Zweckmäßigerweise ist bei einem weiteren Ausführungsbeispiel der Erfindung vorgesehen, dass die im Wesentlichen Y-förmig verzweigte Lichtverteilung sich über einen zur Mittelachse des Flugzeuges symmetrischen ersten Seitenwinkelbereich (2-fach β) zwischen 60° und 100° und/oder innerhalb eines Abstandes vom Flugzeug von mindestens 15 m bis maximale 150 m und über einen symmetrischen zweiten Seitenwinkelbereich (2-fach α)zwischen 0° und 20° und/oder innerhalb eines Abstandes vom Flugzeug von 30 m bis maximal 1000 m erstreckt.

In weiterer vorteilhafter Ausgestaltung der Erfindung kann vorgesehen sein, dass die im Wesentlichen Y-förmig verzweigte Lichtverteilung relativ zur Horizontalen um einen Höhenwinkel zwischen 5° und 20° nach unten gerichtet ist und sich in einem Seitenwinkelbereich von 5° bis 20° erstreckt.

Die Erfindung wird nachstehend anhand eines Ausführungsbeispiels sowie unter Bezugnahme auf die Zeichnung näher erläutert. Im Einzelnen zeigen dabei:
- Fig. 1: eine Draufsicht von oben auf ein im Landeanflug befindliches Flugzeug mit grafischer Darstellung der erfindungsgemäßen Lichtverteilung zur Ausleuchtung der Bereiche seitlich der Landebahn sowie der Landebahn und insbesondere des Bereichs der Landebahn vor und hinter dem avisierten Landeplatz,
- Fig. 2: eine perspektivische Seitendarstellung des Flugzeugs im Landeanflug, ebenfalls mit grafischer Darstellung der erfindungsgemäßen Lichtverteilung, und
- Fig. 3: eine Darstellung des erfindungsgemäß ausgeleuchteten Lichtverteilungsbereichs aus Sicht des Piloten bei einem Landeanflug.

Der Erfindung liegt der Gedanke zugrunde, eine dezidierte, nicht-rotationssymmetrische Lichtverteilung einzusetzen, und zwar durch den Einsatz von LEDs, die das Sichtfeld des Piloten im Landeanflug in deutlich größerem Umfang nutzbar macht. Erfindungsgemäß ist die Lichtverteilung Y-förmig verzweigt, wobei die beiden vom "Stamm" des Y abzweigenden Arme seitlich des Cockpits des Flugzeuges und vor diesem zusammenlaufend angeordnet sind. LEDs und insbesondere LED-Cluster ermöglichen die unterschiedliche Ausrichtung von Lichtquellen einer Leuchte zueinander und erlauben so eine besonders einfache Anpassung an eine gewünschte Lichtverteilung.

Der von den LED-Scheinwerfern ausgehende Lichtstrom ist im Verhältnis zur Größe des auszuleuchtenden Bereichs relativ begrenzt. Daher sollte kein Licht ungenutzt bleiben; auch sollte das Beleuchtungsverhältnis der unterschiedlichen Bereiche zueinander abgewogen sein. Dies führt letztendlich zur erfindungsgemäßen Y-förmig verzweigten Lichtverteilung im Bereich vor dem Flugzeug, wobei dieser Bereich schräg nach unten gerichtet ist.

Innerhalb der erfindungsgemäßen Lichtverteilung kann zweckmäßigerweise ein akzentuierter Referenzpunkt für den Piloten geschaffen werden, der den avisierten Aufsetzpunkt des Flugzeuges auf der Landebahn beleuchtet und den Piloten bei der Ausrichtung des Flugzeuges in der Endphase des Landeanflugs unterstützt. Dabei sollten die Kontrastverhältnisse innerhalb des gesamten beleuchteten Bereichs gering sein, um eine homogene, im Wesentlichen gleichbleibende Beleuchtung auch bei unruhigem Anflug zu gewährleisten.

Die erfindungsgemäße, dezidierte seitliche Ausleuchtung während des Landeanfluges, die bezüglich ihrer Ausdehnung an das periphere Sichtfeld des Piloten angepasst ist, weist eine Beleuchtungsstärke auf, die eine schnelle Wahrnehmung von Referenzobjekten ohne Helligkeitsanpassung des Auges ermöglicht. Die Beleuchtungsstärke zwischen den seitlichen und dem zentralen, vorwärts gerichteten Lichtschwerpunkt sollte daher innerhalb der definierten beleuchteten Flächen einen Kontrast von weniger als 1:15 aufweisen.

Derartige Referenzpunkte in schräg nach unten gerichteter Bodenansicht können Häuser, Bäume oder sonstige Objekte sein, die, da sie aufgrund der erfindungsgemäßen Lichtverteilung nunmehr beleuchtet sind, den Piloten ermöglichen, Höhe, Entfernung und Geschwindigkeit abzuschätzen. Eine Beleuchtung lediglich nach vorne mit einem schmalen Lichtkegel in etwa 300 m und mehr Entfernung, wie es gegenwärtig Stand der Technik ist, ermöglicht dies nicht.

Die seitliche Beleuchtung sollte eine "Tiefe" aufweisen, die in Bezug zur Landegeschwindigkeit des Flugzeuges steht, um eine ausreichende Beleuchtungszeit der Objekte für eine problemlose Pilotenwahrnehmung zu gewährleisten. Die seitliche Beleuchtung in einem größeren Raumwinkel erhöht überdies die Sichtbarkeit des Flugzeuges durch außenstehende Dritte.

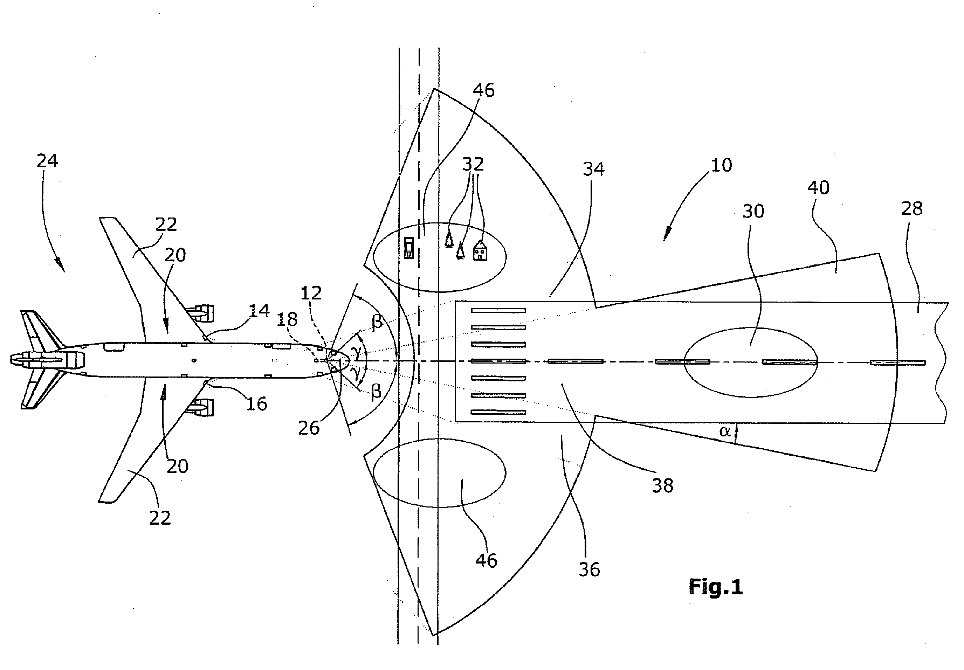

In Fig. 1 ist die erfindungsgemäße im Wesentlichen Y-förmig verzweigte Lichtverteilung 10 in Draufsicht gezeigt. Diese Lichtverteilung wird erzeugt durch LED-Lichtquellen 12, 14 und 16, die in diesem Ausführungsbeispiel am Bugfahrwerk 18, bzw. in den Wurzeln 20 der Flügel 22 eines Flugzeuges 24, angeordnet sind. Durch die Lichtverteilung 10 erhält der Pilot beim Blick aus dem Cockpit 26 ein ausgeleuchtetes Seitensichtfeld sowie ein beleuchtetes Sichtfeld nach vorne auf die Landebahn 28. Die Landezone 30 ist damit gut ausgeleuchtet, wobei zusätzlich Referenzobjekte 32 im Seitenbereich ebenfalls ausgeleuchtet sind.

Die erfindungsgemäße im Wesentlichen Y-förmig verzweigte Lichtverteilung 10 weist zwei Seitenbereiche 34, 36 auf, die die beiden nach oben weisenden, abzweigenden Arme des Buchstaben Y bilden. Von dem Mittelabschnitt 38 der beiden Seitenbereiche 34, 36 aus erstreckt sich der Mittelbereich 40 der Lichtverteilung 10, der sich zu den Seiten hin mit zunehmender Entfernung vom Flugzeug 24 aufweiten kann.

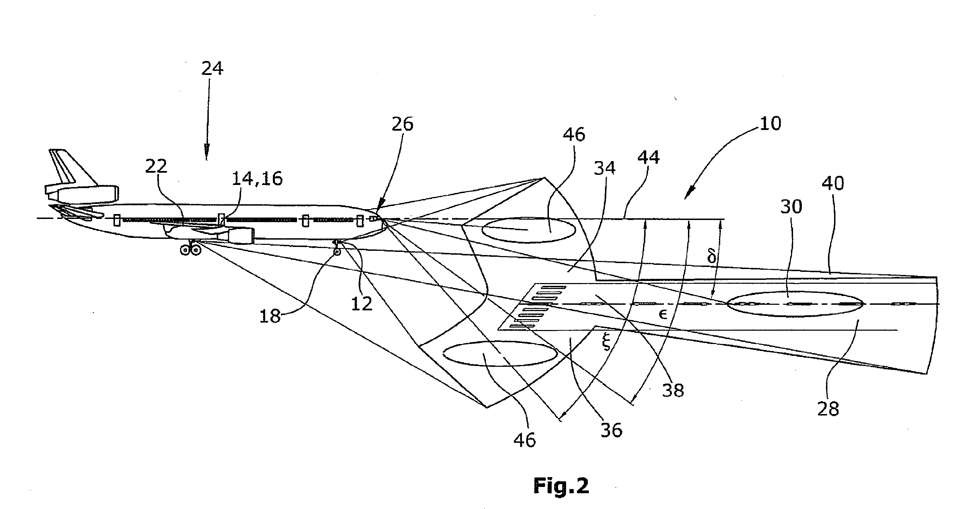

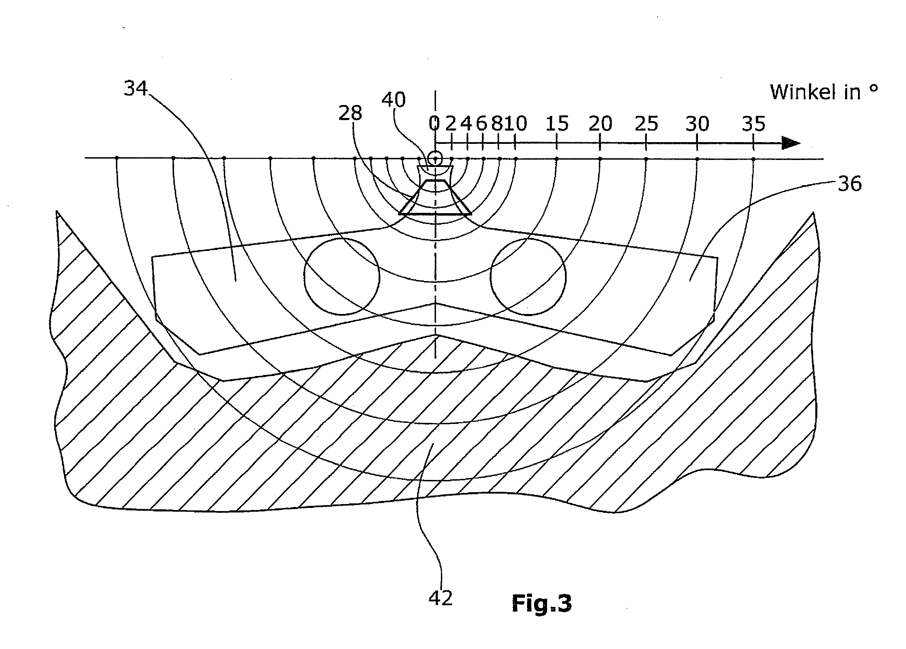

Während Fig. 1 die Lichtverteilung in der Projektion von oben zeigt, ist in Fig. 2 die Lichtverteilung perspektivisch von der Seite dargestellt. Fig. 3 zeigt die Lichtverteilung aus Sicht des Piloten im Landeanflug.

In Fig. 3 ist mit 42 derjenige Bereich bezeichnet, der aufgrund der Konstruktion des Cockpits die Sicht des Piloten versperrt.

Mit der erfindungsgemäßen LED-Landelichtanordnung wird eine Landescheinwerfer-Ausleuchtung erreicht, die in der Draufsicht und in Flugrichtung einem umgekehrten "Y" entspricht wenn sich das Flugzeug in der Anflug-Position (approach) befindet, wie sie in der SAE ARP 693 Empfehlung definiert ist.

Von der Horizontalen 44 aus, die durch den Augen-Referenzpunkt des Piloten verläuft, definiert der Winkel δ den Bezug zur Landezone 30 (siehe Fig. 2). Dieser Winkel δ ist nach SAE ARP 693 implizit gegeben, mag aber bei verschiedenen Flugzeugtypen und verschiedenen Landeplätzen tatsächlich davon abweichen.

Der Winkel ε (siehe Fig. 2) zur Horizontalen 44 bestimmt den sinnvollen vorderen Beginn der Lichtverteilung 10 und liegt in Abhängigkeit von dem Flugzeugtyp im Allgemeinen bei etwa 15°, so dass die untere Kante der Cockpit-Windschutzscheibe den beleuchteten Bereich nicht abdeckt.

Der Winkel ζ (siehe Fig. 2) zur Horizontalen 44 definiert den Winkel zwischen den Mittelpunkten der peripheren Zonen (Seitenbereiche) 46 der Lichtverteilung 10 im Verhältnis zur Horizontalen 44, die mit der peripheren Wahrnehmung des Piloten ohne, bzw. mit nur geringer Bewegung des Kopfes oder der Augen korrespondiert.

Zwischen den peripheren Zonen 46 und der Landezone 30 ist eine verbindende Lichtverteilung mit erhöhter Beleuchtungsstärke vorgesehen, als die der allgemeinen Landescheinwerfer-Lichtverteilung, die es den Piloten erlaubt, mit seiner Sicht zwischen den Zonen höchsten Interesses "zu wandern", ohne dass eine Helligkeitsanpassung des Auges erfolgen muss.

Der Winkel β (siehe Fig. 1) beschreibt die maximale seitliche Beleuchtung, die einerseits limitiert ist durch den seitlichen Fensterrahmen des Cockpits als auch andererseits beschränkt ist durch das Wahrnehmungsvermögen bezüglich der Referenzobjekte 32 innerhalb der peripheren Wahrnehmung des Auges. Die periphere Wahrnehmung des Auges ist eine Funktion der Beleuchtungsstärke, der Geschwindigkeit und auch zwischen Menschen verschieden, und kann in einer solchen Anwendung bei bis zu 20° liegen.

Die Tiefe der peripheren Zonen 46, die besonders gut sichtbar sind, wird durch den Mittelpunkt und den Winkel γ beschrieben und sollte mindestens 30 m betragen, um eine Belichtungszeit der Referenzobjekte von ca. 0,5 s bei einer typischen Landegeschwindigkeit von 70 m/s zu ermöglichen. So hat der Pilot ausreichend Zeit, die Referenzobjekte 32 wahrzunehmen und als Referenz auszuwerten.

Der Winkel α (siehe Fig. 1) ist der Öffnungswinkel des unteren "Beins", also des Mittelbereichs 40 der Y-förmig verzweigten Lichtverteilung 10. Dieser Öffnungswinkel ist dazu gedacht, das Gieren des Flugzeuges 24 bei Seitenwind zu kompensieren und dennoch eine Beleuchtung über die gesamte Breite der Landebahn 28, und zwar auf Höhe der Landezone 30, zu ermöglichen.

Die im Wesentlichen Y-förmig verzweigte Lichtverteilung 10 ermöglicht es außerdem, die gesamte Breite der Landebahn 28 und die Seitenmarkierungen sowohl im vorderen als auch im hinteren Bereich zu beleuchten und so einen exzellenten Eindruck von der Orientierung und dem Abstand des Flugzeuges zur Landebahn zu gewährleisten.

## Patentansprüche

1. Flugzeug mit
- Fahrwerken (18), Flügeln (22) mit Flügelwurzeln sowie Flügelvorderkanten und mit einer LED-Landelichtanordnung, die versehen ist mit
- einer Vielzahl von LED-Lichtquellen (12, 14, 16),
- wobei die LED-Lichtquellen (12, 14, 16) bezogen auf die Mittelachse des Flugzeuges (24) vor diesem eine im Wesentlichen Y-förmig verzweigte Lichtverteilung (10) in schräg nach unten weisender Richtung erzeugen, die zwei seitlich vor dem Flugzeug (24) angeordnete sowie zur Mittelachse hin zusammenlaufende Seitenbereiche (34,36), die relativ zum vorderen Ende des Rumpfes des Flugzeuges (24) gekrümmt verlaufen und einen gemeinsamen mittleren Abschnitt aufweisen, und einen Mittenbereich (40) aufweist, der sich von dem mittleren Abschnitt der beiden zusammenlaufenden Seitenbereiche (34, 36) und über diese hinaus unter seitlicher Aufweitung in Verlängerung der Mittelachse von dem Flugzeug (24) wegweisend erstreckt,
- **dadurch gekennzeichnet, dass** die LED-Lichtquellen (12, 14, 16) am vorderen Fahrwerk (18) und in den Flügelwurzeln angeordnet sind.

2. Flugzeug nach Anspruch 1, **dadurch gekennzeichnet, dass** die im Wesentlichen Y-förmig verzweigte Lichtverteilung (10) sich über einen zur Mittelachse des Flugzeuges (24) symmetrischen ersten Seitenwinkelbereich (2-fach β) zwischen 60° und 100° und/oder innerhalb eines Abstandes vom Flugzeug (24) von mindestens 15 m bis maximale 150 m und über einen symmetrischen zweiten Seitenwinkelbereich (2-fach α)zwischen 0° und 20° und/oder innerhalb eines Abstandes vom Flugzeug (24) von 30 m bis maximal 1000 m erstreckt.

3. Flugzeug nach Anspruch 1 oder 2, **dadurch gekennzeichnet, dass** die im Wesentlichen Y-förmig verzweigte Lichtverteilung (10) relativ zur Horizontalen um einen Höhenwinkel zwischen 5° und 20° nach unten gerichtet ist und sich in einem Seitenwinkelbereich von 5° bis 20° erstreckt.

4. Verwendung einer Vielzahl von LED-Lichtquellen (12, 14, 16) für ein Flugzeug, das Fahrwerke und Flügel mit Flügelwurzeln sowie Flügelvorderkanten aufweist, zur Anordnung an dem vorderen Fahrwerk (18) und in den Flügelwurzeln, wobei die LED-Lichtquelle (12, 14, 16) bezogen auf die Mittelachse des Flugzeuges (24) vor diesem eine im Wesentlichen Y-förmig verzweigte Lichtverteilung (10) in schräg nach unten weisender Richtung erzeugen, die zwei seitlich vor dem Flugzeug (24) angeordnete sowie zur Mittelachse hin zusammenlaufende Seitenbereiche (34,36), die relativ zum vorderen Ende des Rumpfes des Flugzeuges (24) gekrümmt verlaufen und einen gemeinsamen mittleren Abschnitt aufweisen, und einen Mittenbereich (40) aufweist, der sich von dem mittleren Abschnitt der beiden zusammenlaufenden Seitenbereiche (34, 36) und über diese hinaus unter seitlicher Aufweitung in Verlängerung der Mittelachse von dem Flugzeug (24) wegweisend erstreckt.

5. Verwendung nach Anspruch 4, **dadurch gekennzeichnet, dass** die im Wesentlichen Y-förmig verzweigte Lichtverteilung (10) sich über einen zur Mittelachse des Flugzeuges (24) symmetrischen ersten Seitenwinkelbereich (2-fach β) zwischen 60° und 100° und/oder innerhalb eines Abstandes vom Flugzeug (24) von mindestens 15 m bis maximale 150 m und über einen symmetrischen zweiten Seitenwinkelbereich (2-fach α)zwischen 0° und 20° und/oder innerhalb eines Abstandes vom Flugzeug (24) von 30 m bis maximal 1000 m erstreckt.

6. Verwendung nach Anspruch 4 oder 5, **dadurch gekennzeichnet, dass** die im Wesentlichen Y-förmig verzweigte Lichtverteilung (10) relativ zur Horizontalen um einen Höhenwinkel zwischen 5° und 20° nach unten gerichtet ist und sich in einem Seitenwinkelbereich von 5° bis 20° erstreckt.

## Claims

1. An aircraft comprising
- running gears (18), wings (22) having wing roots and wing front edges and an LED landing light arrangement provided with
- a plurality of LED light sources (12, 14, 16),
- the LED light sources (12, 14, 16), with respect to the central axis of the aircraft (24), generating in front of the same a light distribution (10) branching substantially in Y-shape and directed obliquely downwardly, said light distribution having two lateral portions (34, 36) that are arranged laterally in front of the aircraft (24) and converge towards the central axis and extend in curved fashion relative to the front end of the fuselage of the aircraft (24) and have a common central section, and having a central portion (40) that extends from the central section of the two converging lateral portions (34, 36) and beyond the same while expanding laterally in extension of the central axis in a direction facing away from the aircraft (24),
**characterized in that**
- the LED light sources (12, 14, 16) are arranged at the front running gear (18) and in the wing roots.

2. The aircraft of claim 1,
**characterized in that** the light distribution (10) branching substantially in Y-shape extends across a first lateral angle range (double β) of between 60° and 100° that is symmetric with respect to the central axis of the aircraft (24) and/or within a distance from the aircraft (24) of at least 15 m to at the most 150 m, and extends across a symmetric second lateral angle range (double α) of between 0° and 20° and/or within a distance from the aircraft (24) of from 30 m to at the most 1000 m.

3. The aircraft of claim 1 or 2,
**characterized in that** the light distribution (10) branching substantially in Y-shape, with respect to the horizontal, is directed downwardly at an elevation angle of between 5° and 20° and extends in a lateral angle range of from 5° to 20°.

4. Use of a plurality of LED light sources (12, 14, 16) for an aircraft comprising running gears and wings having wing roots and wing front edges, for arrangement of the same in the front running gear (18) and in the wing roots, the LED light sources (12, 14, 16), with respect to the central axis of the aircraft (24), generating in front of the same a light distribution (10) branching substantially in Y-shape and directed obliquely downwardly, said light distribution having two lateral portions (34, 36) that are arranged laterally in front of the aircraft (24) and converge towards the central axis and extend in curved fashion relative to the front end of the fuselage of the aircraft (24) and have a common central section, and having a central portion (40) that extends from the central section of the two converging lateral portions (34, 36) and beyond the same while expanding laterally in extension of the central axis in a direction facing away from the aircraft (24).

5. The use of claim 4,
**characterized in that** the light distribution (10) branching substantially in Y-shape extends across a first lateral angle range (double β) of between 60° and 100° that is symmetric with respect to the central axis of the aircraft (24) and/or within a distance from the aircraft (24) of at least 15 m to at the most 150 m, and extends across a symmetric second lateral angle range (double α) of between 0° and 20° and/or within a distance from the aircraft (24) of from 30 m to at the most 1000 m.

6. The use of claim 4 or 5,
**characterized in that** the light distribution (10) branching substantially in Y-shape, with respect to the horizontal, is directed downwardly at an elevation angle of between 5° and 20° and extends in a lateral angle range of from 5° to 20°.

## Revendications

1. Avion avec
- des trains d'atterrissage (18), des ailes (22) avec des attaches d'aile ainsi que des bords d'attaque d'aile, et avec un agencement de lumière d'atterrissage à DEL qui est équipé
- d'une pluralité de sources lumineuses à DEL (12, 14, 16),
- sachant que les sources lumineuses à DEL (12, 14, 16) génèrent, par rapport à l'axe médian de l'avion (24) et devant ce dernier, une distribution de lumières (10), ramifiée sensiblement en forme de Y dans une direction pointant obliquement vers le bas, qui comporte deux zones latérales (34, 36) disposées latéralement devant l'avion (24) et confluant vers l'axe médian, qui décrivent une courbure relativement à l'extrémité avant du fuselage de l'avion (24) et comportent un secteur médian commun, et qui comporte une zone médiane (40) qui s'étend, d'une manière indiquant la route, du secteur médian des deux zones latérales (34, 36) confluantes et au-delà de ces dernières avec un évasement latéral dans la prolongation de l'axe médian de l'avion (24),
- **caractérisé en ce que** les sources lumineuses à DEL (12, 14, 16) sont disposées sur le train d'atterrissage avant (18) et dans les attaches d'aile.

2. Avion selon la revendication 1, **caractérisé en ce que** la distribution de lumières (10) ramifiée sensiblement en forme d'Y s'étend au-dessus d'une première zone angulaire latérale (2 x β) entre 60° et 100°, symétrique à l'axe médian de l'avion (24), et/ou sur une distance de l'avion (24) d'au moins 15 m jusqu'à au maximum 150 m et au-dessus d'une deuxième zone angulaire latérale symétrique (2 x α) entre 0° et 20° et/ou sur une distance de l'avion (24) de 30 m jusqu'à au maximum 1000 m.

3. Avion selon la revendication 1 ou 2, **caractérisé en ce que** la distribution de lumières (10) ramifiée sensiblement en forme d'Y est dirigée vers le bas relativement à l'horizontale d'un angle d'élévation entre 5 ° et 20 ° et s'étend dans une zone angulaire latérale de 5 ° à 20 °.

4. Utilisation d'une pluralité de sources lumineuses à DEL (12, 14, 16) pour un avion, qui comprend des trains d'atterrissage et des ailes avec des attaches d'aile ainsi que des bords d'attaque d'aile, en vue de leur disposition sur le train d'atterrissage avant (18) et dans les attaches d'aile, sachant que les sources lumineuses à DEL (12, 14, 16) génèrent, par rapport à l'axe médian de l'avion (24), et devant ce dernier, une distribution de lumières (10), ramifiée sensiblement en forme d'Y dans une direction pointant obliquement vers le bas, qui comporte deux zones latérales (34, 36) disposées latéralement devant l'avion (24) et confluant vers l'axe médian, qui présentent une courbure relativement à l'extrémité avant du fuselage de l'avion (24) et comportent un secteur médian commun, et qui comporte une zone médiane (40) qui s'étend, d'une manière indiquant la route, du secteur médian des deux zones latérales (34, 36) confluantes et au-delà de ces dernières avec un évasement latéral dans la prolongation de l'axe médian de l'avion (24).

5. Utilisation selon la revendication 4, **caractérisé en ce que** la distribution de lumières (10) ramifiée sensiblement en forme d'Y s'étend au-dessus d'une première zone angulaire latérale (2 x ß) entre 60° et 100°, symétrique à l'axe médian de l'avion (24), et/ou sur une distance de l'avion (24) d'au moins 15 m jusqu'à au maximum 150 m et au-dessus d'une deuxième zone angulaire latérale symétrique (2 x α) entre 0° et 20° et/ou sur une distance de l'avion (24) de 30 m jusqu'à au maximum 1000 m.

6. Utilisation selon la revendication 4 ou 5, **caractérisé en ce que** la distribution de lumières (10) ramifiée sensiblement en forme d'Y est dirigée vers le bas relativement à l'horizontale d'un angle d'élévation entre 5 ° et 20 ° et s'étend dans une zone angulaire latérale de 5 ° à 20 °.
